# EUROPÄISCHE PATENTSCHRIFT

(11) **EP 1 172 771 B1**
(45) Veröffentlichungstag und Bekanntmachung des Hinweises auf die Patenterteilung: **19.04.2006**
(21) Anmeldenummer: 00115309.7
(22) Anmeldetag: 14.07.2000
(51) Int. Cl.: G07C 9/00, G10L 17/00

(54) **Verfahren und System zur Autorisierung einer kommerziellen Transaktion**
Process and system for authorising a commercial transaction
Procédé et système pour autoriser une transaction commerciale

(43) Veröffentlichungstag der Anmeldung: 16.01.2002
(73) Patentinhaber: VOICE.TRUST AG, 80637 München (DE)
(72) Erfinder: Kramer, Michael, 82313Gauting (DE); Tacke, Jörg, 82319 Starnberg (DE)
(74) Vertreter: Kehl, Günther

(56) Entgegenhaltungen:
- EP-A- 0 444 351
- EP-A- 0 454 363
- EP-A- 0 808 048
- US-A- 3 792 446
- US-A- 3 896 266
- US-A- 5 339 385
- US-A- 5 806 040

## Beschreibung

Die vorliegende Erfindung betrifft ein Verfahren sowie ein System zur Authorisierung einer kommerziellen Transaktion zwischen einem Kunden und einem Waren- oder Dienstleistungsanbieter durch einen Authorisierungsdienstleister mit Authentifizierung des Kunden durch Vergleich einer biometrischen Probe des Kunden mit einem beim Authorisierungsdienstleister gespeicherten biometrischen Muster des Kunden.

Aufgrund des umfassenden Einsatzes von elektronischen Datenverarbeitungsanlagen im Zahlungsverkehr, kommen verstärkt Systeme zur Identifizierung und/oder zur Authentifizierung von Personen vor der Durchführung von kommerziellen Transaktionen zunehmend an Bedeutung. Die zumeist am Anfang eines entsprechenden Vorgangs erforderliche Identifizierung einer Person zielt darauf ab, die Identität der betreffenden Person festzustellen. Unter Authentifizierung ist im allgemeinen ein der Identifizierung nachgeschalteter Kontrollvorgang zu verstehen, mittels dessen überprüft wird, ob die von der Person im Rahmen der Identifizierung gemachten Angaben richtig sind; es handelt sich mithin gewissermaßen um eine Echtheitsprüfung bezüglich der betreffenden Person.

Bisher im Zahlungsverkehr üblich sind zwei "Token"-basierte Verfahren, wobei hier als "Token" im Indentifizierungs-/Authentifizierungsprozeß verwendete Schlüsselgegenstände, d.h. vor allem die gängigen Magnet- oder Chip-Karten bezeichnet werden. Möchte der Kunde bezahlen, so identifiziert er sich mit seiner Bank- oder Kreditkarte, auf der die Unterschrift des Kunden abgebildet, sowie eine bestimmungsgemäß nur dem Kunden bekannte, meist vierstellige persönliche Identifikationsnummer (PIN) gespeichert ist.

Im ersten üblichen Verfahren hat der Kunde unter Aufsicht des Verkaufspersonals eine Unterschrift zu leisten, und die Authentifizierung erfolgt durch Vergleich der geleisteten Unterschrift des Kunden mit der auf der Karte abgebildeten Unterschrift nach Augenschein, einer Methode, die sich teils aufgrund ihr immanenter Mängel, wie etwa mit unterschiedlichen Schreibgeräten und auf unterschiedlichen Unterlagen anders ausfallenden, häufig nicht allzuschwer nachzuahmenden Schriftzügen, teils aufgrund von Nachlässigkeiten des die Unterschriften in Augenschein nehmenden Verkaufspersonals häufig als unzuverlässig herausstellt.

Durch betrügerisch agierendes Personal, beispielsweise in einem Restaurant, kommt es zudem mitunter vor, daß - vom Kunden unbemerkt - innerhalb eines kurzen Zeitraums von dessen Kreditkarte eine illegale Kopie gezogen wird, um letztere später für vom Kunden unerwünschte Transaktionen auf seine Kosten einzusetzen.

Im zweiten üblichen Verfahren authentifiziert sich der Kunde durch verdeckte Eingabe seiner PIN in ein beim Waren- oder Dienstleistungsanbieter installiertes Kartenlesegerät, welches über ein Kommunikationsnetzwerk mit dem die gewünschte Transaktion ausführenden Institut verbunden ist, und diese Transaktion authorisiert, wenn die vom Kunden eingegebene PIN mit der auf der Karte gespeicherten PIN übereinstimmt.

Das Prinzip der persönlichen Identifikationsnummer weist jedoch eine Reihe von Nachteilen auf, von denen einige in der Folge kurz dargelegt werden.

So muß die nicht kontextbezogene, sondern rein willkürlich vorgegebene PIN von der betreffenden Person üblicherweise an einem vermeintlich sicheren Platz, beispielsweise auf einem Notizblock oder in einem Terminkalender, aufgeschrieben werden, da ansonsten die Gefahr besteht, daß die Person ihre persönliche Identifikationsnummer im Laufe der Zeit vergißt. Dieses Aufschreiben der persönlichen Identifikationsnummer ist jedoch insofern riskant, als natürlich jederzeit die Gefahr des Verlustes des Notizblocks oder Terminkalenders besteht. Ein derartiger Verlust hat zur Folge, daß die persönliche Identifikationsnummer für die Person unwiederbringlich verloren ist, so daß zumeist unter unverhältnismäßig großem verwaltungstechnischem und damit auch zeitlichem und oft finanziellen Aufwand die Ausstellung einer neuen Bank- oder Kreditkarte mit einer neuen persönlichen Identifikationsnummer beantragt werden muß.

Zudem besteht die Gefahr des Mißbrauchs, wenn ein Dritter eine PIN oder ein Kenn- bzw. Paßwort erfährt, indem er beispielsweise den Inhaber bei deren Eingabe unbemerkt beobachtet oder Dokumente wie etwa Notizbücher oder Terminkalender, in denen gemeinhin derartige persönliche identifikationsnummern aufgeschrieben werden, zusammen mit der Bank- oder Kreditkarte stiehlt oder nach Verlust durch die berechtigte Person findet und unerlaubt verwendet.

Häufig notieren Verbraucher unvernüftigerweise gar ihre PIN auf der Bank- oder Kreditkarte, so daß ein Dieb mit dem Stehlen der Karte automatisch auch in Besitz der ihn zu einer fälschlichen Authentifizierung befähigenden PIN gelangt. Auch läßt sich nicht ausschließen, daß ein Kartendieb durch den Einsatz elektronischer Hilfsmittel zur Kenntnis der auf der Karte gespeicherten PIN gelangt.

Eine neuere Klasse von Authentifizierungsverfahren sind die sogenannten biometrischen Methoden, die sich der elektronischen Auswertung physiologischer Merkmale wie z.B. des Fingerabdrucks, des Iris-Musters des Auges oder der individuellen Merkmale der Stimme (des sogenannten "voiceprints") bedienen mit dem Vorteil, daß weder irgendwelche Karten oder sonstige Tokens mitgeführt werden müssen.

In WO 98/09227 sind ein Verfahren und ein System zur Authorisierung kommerzieller Transaktionen zwischen einem Käufer und einem Verkäufer ohne Verwendung eines Authentisierungstokens offenbart, wobei der Käufer die Annahme eines Angebots des Verkäufers zur Durchführung der Transaktion durch Eingabe seiner persönlichen Authentifizierungsinformation, bestehend aus einer PIN und einer oder mehreren biometrischen Probe(n), signalisiert, welche zu einem Computersystem übermittelt wird, das die eingegangene Authentifizierungsinformation mit den in einem Registrierschritt erfaßten biometrischen Proben des Käufers vergleicht. Wenn das Computersystem den Käufer erfolgreich indentifiziert, wird ein Konto des Käufers um einen Betrag belastet, der einem Konto des Verkäufers gutgeschrieben wird, und das Ergebnis der Transaktion wird sowohl dem Verkäufer als auch dem Käufer übermittelt.

Als mögliche zu verwendende biometrische Proben werden ein Fingerabdruck des Käufers, eine Aufnahme der Iris des Käufers und eine Stimmprobe des Käufers aufgeführt. Für den Fall des Diebstahls der biometrischen Information, im Falle des Einsatzes einer Stimmprobe beispielsweise als heimliches Aufzeichnen der Stimme des Käufers vorstellbar, ist in WO 98/09227 als Gegenmittel eine Änderung der PIN des Käufers vorgesehen, der die biometrische Information im Speicher des Computersystems zugeordnet ist. Das bedeutet, daß nach erfolgtem Diebstahl der biometrischen Information die PIN nicht nur die Aufgabe der Identifikation des Käufers, sondern mittelbar auch die der Authentifizierung übernimmt. Bei einer endlichen Anzahl n an Stellen der PIN ist es also möglich, mit höchstens 10ⁿ Versuchen unter Benutzung der gestohlenen biometrischen Information eine fehlerhafte Authentifizierung und somit eine erschlichene Transaktion zu erreichen.

Generell ist zu bedenken, daß über ein öffentliches Kommunikationsnetzwerk kommunizierende Computersysteme stets der Gefahr durch potentielle Manipulationen unbefugt ins System eindringender Dritte ausgesetzt sind. Beim Versuch, sich über ein öffentlich zugängliches Netzwerk unbefugt Zugang zu einem Computersystem zu verschaffen, erfolgt häufig ein permanent wiederholtes, automatisiertes Daueranwählen (sogn. *Spamming*) des angegriffenen Systems durch den Manipulateur. Selbst wenn es hierdurch nicht gelingen sollte, in das angegriffene System einzudringen, so stellt das Daueranwählen doch eine Beeinträchtigung der Kommunikation des angegriffenen Systems dar und kann bis zum Erliegen der regulären Verbindungsvorgänge führen, d.h. die Abwicklung ordnungsgemäßer Transaktionen könnte zum Erliegen kommen.

Um Manipulationen vorzubeugen ist es auch wünschenswert, daß das verkäuferseitig installierte elektronische Kommunikationsmittel einer Authentisierung durch das die Transaktion vornehmende Computersystem unterliegt.

Die Aufgabe der vorliegenden Erfindung ist es, ein Verfahren und ein System zur Authorisierung kommerzieller Transaktionen zwischen einem Käufer und einem Verkäufer zu schaffen, welche einen erhöhten Schutz gegen Verwendung widerrechtlich beschaffter biometrischer Proben eines als Käufer Registrierten durch einen Dritten sowie gegen elektronische Angriffe mittels automatisierter Daueranwahl, sogenanntes *spamming,* bieten, welche darüberhinaus ohne den Einsatz einer PIN mit den obenbeschriebenen Nachteilen auskommen, eine sichere Identifizierung und Authentifizierung des Verkäuferanschlusses gewährleisten, und welche zudem mit überschaubarem technischen Aufwand zu implementieren sind.

Diese Aufgabe wird durch ein Verfahren gemäß Anspruch 1 sowie ein System gemäß Anspruch 7 gelöst.

Unter einer Telefonverbindung ist in diesem Zusammenhang eine Verbindung über ein zur Telefonie geeignetes Netzwerk oder Funknetzwerk gemeint, entsprechend ist unter einem Telefon allgemein eine zur Telefonie geeignete Vorrichtung zu verstehen, und ein Telefonnetz bezeichnet ein zur Telefonie geeignetes Netzwerk oder Funknetzwerk, beispielsweise ein ISDN- oder UMTS-Netz oder das Internet.

Ein Vorteil der Erfindung ist, daß der Kunde kein irgendwie geartetes "Token", beispielsweise eine Speicherkarte, mit sich führen muß, ein Bezahlungsvorgang jedoch ebenso komfortabel wie mit einer herkömmlichen Kreditkarte abläuft, so die Erfindung also gleichsam wie eine "virtuelle Kreditkarte" ohne das Risiko des Verlusts durch Diebstahl oder Verlieren wirkt.

Ein weiterer Vorteil der Erfindung ist, daß das unbefugte Abhören oder Mitschneiden eines Authentifizierungsvorgangs kein Sicherheitsrisiko mehr darstellt, da sich die zur Authentifizierung nachzusprechende Wortfolge für jeden erneuten Authentifizierungsvorgang ändert. Ein weiterer Vorteil dieser Ausführungsform der Erfindung ist, daß durch die Nutzung des Telefons zur Eingabe der zur Authentifizierung dienenden Stimmprobe teilnehmerseitig keine aufwendigen Zusatzinstallationen, wie etwa ein Fingerabdruck-Scanner, erforderlich sind.

In einer bevorzugten erfindungsgemäßen Ausführungsform erfolgt die Eingabe der Kennung sowie der für die Transaktion benötigten Daten durch Spracheingabe. Vorteilhafterweise ist die Kennung der Name des Kunden, so daß sich der Kunde kein Nummer oder derleichen merken muß.

In einer weiteren vorteilhaften Ausführungsform der Erfindung wird die Einleitung der Transaktion dem Waren- oder Dienstleistungsanbieter vom Authorisierungsdienstleister unmittelbar mitgeteilt, beispielsweise durch eine Faxnachricht, eine E-Mail oder SMS (Short-Message-Service)-Nachricht, so daß dieser beispielsweise eine Ware sofort an den Kunden übergeben kann mit der Gewißheit, daß die entsprechende Zahlung bereits erfolgt ist. Vorteilhafterweise wird auch dem Käufer die Einleitung der Transaktion vom Authorisierungsdienstleister unmittelbar bestätigt, und zwar vorzugsweise über die bereits aufgebaute Telefonverbindung.

Um elektronische Daueranwahl des Authorisierungsdienstleisters durch unberechtigte Dritte zu vermeiden, wird vorzugsweise für jeweilige neue Authorisierungsvorgänge die Verbindung zum Authorisierungsdienstleister über einen elektronischen Vermittler mittels eines virtuellen Switches an regelmäßig, beispielsweise alle 15 Minuten, wechselnde reale Telefonnummern des Authorisierungsdienstleisters vermittelt. Der Einsatz eines solchen virtuellen Switches hat auch den Vorteil, daß die Verbindungssicherheit erhöht ist, wenn Beispielsweise Bereiche des öffentlichen Telefonnetzwerks durch einen Defekt ausfallen.

Die Erfindung hat den Vorteil, daß sich für den Kunden der Registrierungsvorgang, d.h. der Vorgang der erstmaligen Hinterlegung einer Stimmprobe als Referenz-Stimmuster sehr einfach und zugleich äußerst sicher gestalten kann, beispielsweise telefonisch von einem Bank-, Post-Institut oder die entsprechende Behörde bestätigt den Registrierungsvorgang anschließend dem Authorisierungsdienstleister. Auch ist beispielsweise eine telefonische Registrierung von zu Hause aus mit anschließender schriftlicher Bestätigung denkbar.

Die vorliegende Erfindung wird im folgenden unter Zuhilfename der Zeichnungen beispielhaft näher erläutert. Hierbei zeigt
- Fig.1: eine schematische Darstellung eines erfindungsgemäßen Ausführungsbeispiels eines Systems zur Authorisierung einer kommerziellen Transaktion zwischen einem Kunden und einem Waren-oder Dienstleistungsanbieter,
- Fig.2a, Fig.2b: eine in Form eines Ablaufplans schematisierte Darstellung der Abläufe bei der Authentifizierung im Rahmen eines erfindungsgemäßen Ausführungsbeispiels des Verfahrens.

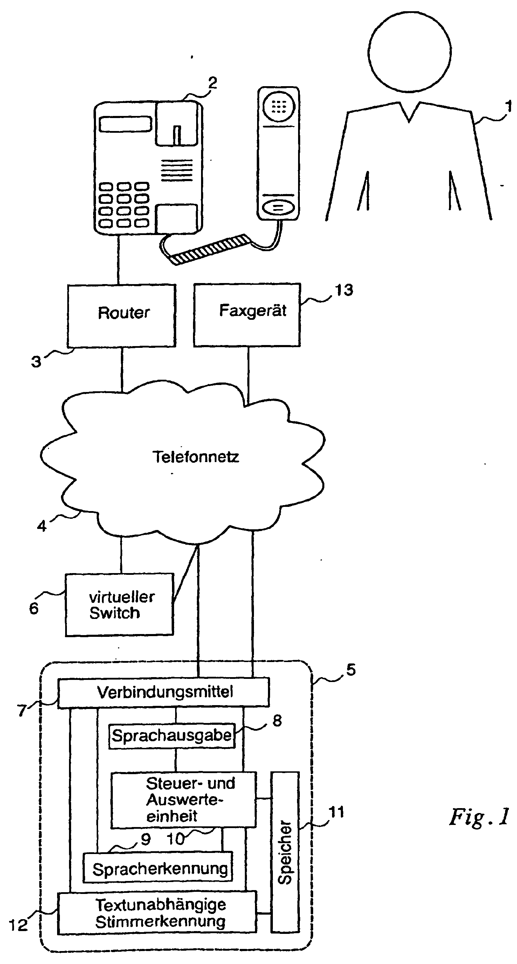

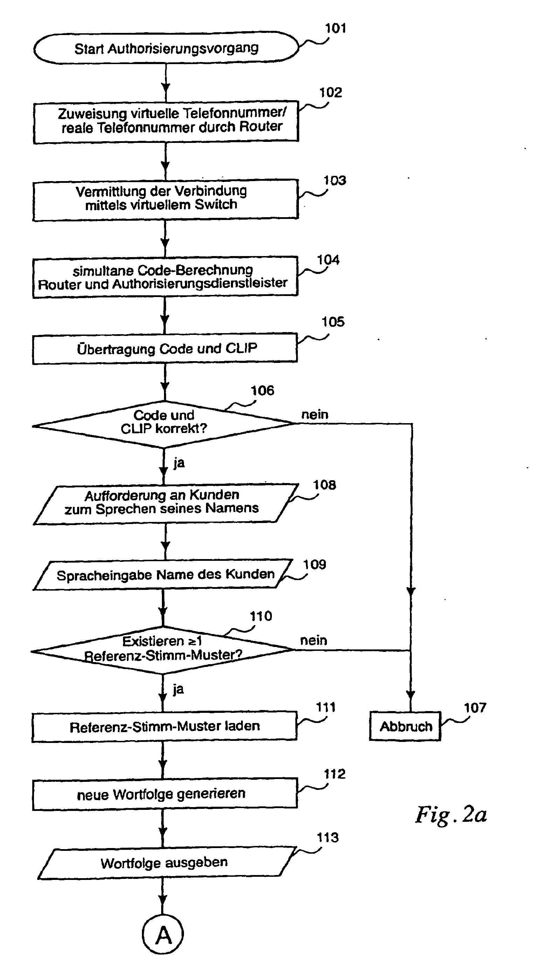

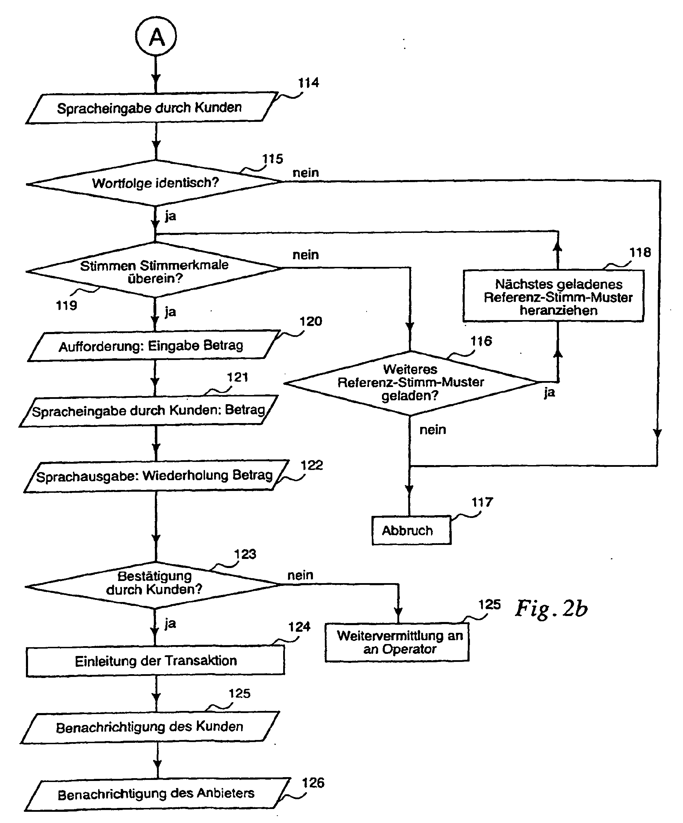

Beschrieben wird im folgenden die Authorisierung einer kommerziellen Transaktion zwischen einem Kunden und einem Waren- oder Dienstleistungsanbieter durch einen Authorisierungsdienstleister mit Authentifizierung des Kunden durch Vergleich einer Stimmprobe mit einem beim Authorisierungsdienstleister gespeicherten Stimmuster anhand des in Fig.1 schematisch dargestellten Ausführungsbeispiels eines erfindungsgemäßen Systems nach dem in Fig.2a und 2b schematisch dargestellten Ablauf einer erfindungsgemäßen Ausführungsform des Verfahrens.

Der zahlungswillige Kunde 1 wird an der Telefonanlage 2 des Waren- oder Dienstleistungsanbieters durch einen anbieterseitig installierten Router 3 über das Telefonnetz 4 mit dem Authorisierungsdienstleister 5 verbunden. Hierbei weist der Router 3 zur Anwahl des Authorisierungsdienstleisters 5 einer virtuellen Telefonnummer die reale Telefonnummer des Authorisierungsdienstleisters 5 zu (Schritt 102 in Fig.2a). Die Verbindung zum Authorisierungsdienstleister 5 wird über einen elektronischen Vermittler mittels eines virtuellen Switches 6 an die reale Telefonnummer des Authorisierungsdienstleisters 5 vermittelt (Schritt 103 in Fig.2a), die regelmäßig, beispielsweise alle 15 Minuten, wechselt, um elektronische Daueranwahl des Authorisierungsdienstleisters 5 durch unberechtigte Dritte, sogenanntes Spamming, zum vermeiden. Zunächst wird die Nummer der Anbietertelefonanlage 2 als sogenannter CUP (Calling Line Identification Presentation) sowie ein vom anbieterseitig installierten Router 3 errechneter Code (Schritt 105 in Fig.2a), der simultan auch von einem Verbindungsmittel 7 des Authorisierungsdienstleisters 5 mit dem gleichen Algorithmus erzeugt wird (Schritt 104 in Fig.2a) zum Authorisierungsdienstleister 5 übertragen. Das Verbindungsmittel 7 des Authorisierungsdienstleisters 5 überprüft Code und CUP (Schritt 106 in Fig.2a) und akzeptiert die Verbindung nur dann, wenn der CUP einem in einem Speicher 11 des Authorisierungsdienstleisters 5 abgelegten Datensatz eines beim Authorisierungsdienstleister 5 registrierten Anbieter zuordenbar ist, und wenn der übertragene Code. mit dem beim Authorisierungsdienstleister 5 errechneten Code übereinstimmt. Ist dies nicht gegeben, wird die Verbindung nicht akzeptiert (Schritt 107 in Fig.2a). Andernfalls wird der Kunde 1 über eine Sprachausgabe 8 aufgefordert, seinen vollen Namen (Vor- und Nachname) zu sprechen (Schritt 108 in Fig.2a).

Der Kunde 1 spricht am Telefon 2 seinen vollen Namen (Schritt 109 in Fig.2a), der über das Telefonnetz übermittelt 4 und vom Verbindungsmittel 7 empfangen wird. Eine beim Authorisierungsdienstleister 5 implementierte Spracherkennung 8 überführt das digitalisierte Klangbild des Namens des Kunden 1 in den Namen des Kunden. Eine Steuer- und Auswerte-Einheit 10 überprüft, ob ein im Speicher 11 abgelegtes Referenzstimmuster existiert, das dem angegebenen Namen zuordenbar ist (Schritt 110 in Fig.2a). Falls dies nicht der Fall ist, so wird das Authentifizierungsverfahren abgebrochen (Schritt 107 in Fig.2a) bzw. der Kunde 1 mit einem Operator verbunden, der gegebenenfalls weitere Schritte, beispielsweise die Beseitigung technischer Probleme, einleitet. Existiert ein Referenzstimmuster im Speicher 11, das dem angegebenen Namen zuordenbar ist, so wird dieses Referenzstimmuster aus dem Speicher geladen (Schritt 111 in Fig.2a). Existieren aufgrund von Namensgleichheiten mehrere Stimmuster, die dem Namen zuordenbar sind, so werden diese geladen. Da der Kunde 1 seinen vollen Namen genannt hat, ist eine hohe Zahl an in Frage kommenden Stimmustem unwahrscheinlich.

Die Steuer- und Auswerte-Einheit 10 generiert über die Sprachausgabe 8 eine dem Kunden 1 zuvor nicht bekannte Wortfolge (Schritt 112 in Fig.2a), die über das Telefonnetz 4 zum Kunden 1 übertragen wird (Schritt 113 in Fg.2a). Der Kunde 1 spricht die Wortfolge am Telefon 2 als Stimmprobe nach (Schritt 114 in Fig.2b), die über das Telefonnetz 4 übermittelt und vom Verbindungsmittel 7 des Authorisierungsdienstleisters 5 empfangen wird. Die beim Authorisierungsdienstleister 5 implementierte Spracherkennung 9 analysiert, ob sich die digitalisierte Wortfolge aus denselben Wörtern in derselben Reihenfolge zusammensetzt wie die von der Steuer- und Auswerteeinheit 10 über die Sprachausgabe 8 generierte Wortfolge (Schritt 115 in Fig.2b). Ist dies nicht der Fall, so wird das Authorisierungsverfahren abgebrochen (Schritt 117 in Fig.2b) bzw. der Kunde 1 mit einem Operator verbunden, der gegebenenfalls weitere Schritte, beispielsweise die Beseitigung technischer Probleme, einleitet. Andernfalls wird es fortgesetzt.

Eine beim Authorisierungsdienstleister 5 implementierte textunabhängige Stimmerkennung 12 vergleicht die digitalisierte Wortfolge mit dem geladenen, bzw., falls aufgrund von Namensgleichheiten mehrere Stimmuster geladen wurden, dem ersten geladenen Referenzstimmuster in Hinblick auf für einen Sprecher charakteristische individuelle Stimmerkmale (Schritt 119 in Fig.2b). Ist die Übereinstimmung zwischen der digitalisierten Wortfolge und dem Referenzstimmuster des Kunden 1 in Hinblick auf für einen Sprecher charakteristische individuelle Stimmerkmale kleiner als ein vorbestimmter Schwellenwert, so überprüft die Steuer- und Auswerte-Einheit ob ein weiteres geladenes Referenzstimmuster existiert (Schritt 116 in Fig.2b). Existiert kein weiteres geladenes Referenzstimmuster, so wird das Authorisierungsverfahren abgebrochen (Schritt 117 in Fig.2b) bzw. der Kunde 1 mit einem Operator verbunden, der gegebenenfalls weitere Schritte, beispielsweise die Beseitigung technischer Probleme, einleitet.

Ist die Übereinstimmung zwischen der digitalisierten Wortfolge und dem Referenzstimmuster des Kunden in Hinblick auf für einen Sprecher charakteristische individuelle Stimmerkmale zwar kleiner als ein vorbestimmter Schwellenwert, existieren jedoch weitere geladene Referenzstimmuster, so wird das nächste geladene Referenzstimmuster herangezogen (Schritt 118 in Fg.2b) und auf für einen Sprecher charakteristische individuelle Stimmerkmale untersucht (Schritt 119 in Fig.2b). Gegebenenfalls wird diese Schleife mehrfach durchlaufen, bis entweder kein weiteres geladenes Stimmuster existiert oder die Übereinstimmung zwischen der digitalisierten Wortfolge und dem Referenzstimmuster des Kunden in Hinblick auf für einen Sprecher charakteristische individuelle Stimmerkmale größer als ein vorbestimmter Schwellenwert ist.

Wenn die Übereinstimmung zwischen der digitalisierten Wortfolge und dem Referenzstimmuster des Kunden 1 in Hinblick auf für einen Sprecher charakteristische individuelle Stimmerkmale größer als ein vorbestimmter Schwellenwert ist, so wird über die Sprachausgabe 8 eine Aufforderung generiert, die Höhe des zu transferierenden Betrages und gegebenenfalls weitere für die zu authorisierende Transaktion erforderliche Daten zu nennen (Schritt 120 in Fig.2b), und über das Telefonnetz 4 zum Kunden 1 übertragen. Der Kunde 1 nennt am Telefon 2 die Höhe des zu transferierenden Betrages und gegebenenfalls weitere für die zu authorisierende Transaktion erforderliche Daten (Schritt 121 in Fig.2b). Diese werden über das Telefonnetz 4 übertragen, vom Verbindungsmittel 7 empfangen und von der Spracherkennung 9 in eine von der Steuer- und Auswerteeinheit 10 verarbeitbare Form übersetzt.

Die Steuer- und Auswerteeinheit 10 generiert über die Sprachausgabe 8 eine Wiederholung des Betrages (Schritt 122 in Fig.2b) verbunden mit der Rückfrage an den Kunden, ob die Höhe des zu transferierenden Betrages und die gegebenenfalls weiteren für die zu authorisierende Transaktion erforderlichen Daten richtig verstanden wurden. Diese Rückfrage wird über das Telefonnetz 4 zum Kunden 1 übertragen. Bestätigt dieser die Richtigkeit der Angaben (Schritt 123 in Fig.2b), so wird die Transaktion von der Steuer- und Auswerteeinheit 10 eingeleitet (Schritt 124 in Fig.2b), der Kunde 1 wird darüber durch eine von der Sprachausgabe 8 generierte Nachricht über das Telefonnetz 4 benachrichtigt (Schritt 125 in Fig.2b), der Waren- oder Dienstleistungsanbieter erhält eine sofortige Nachricht über die Einleitung der Transaktion auf seinem Faxgerät 13 (Schritt 126 in Fig.2b). Andernfalls wird der Kunde 1 mit einem Operator verbunden, der dann die entsprechenden Schritte zur Authorisierung der Transaktion einleiten kann.

## Patentansprüche

1. Verfahren zur Authorisierung einer kommerziellen Transaktion zwischen einem Kunden (1) und einem Waren- oder Dienstleistungsanbieter (2) durch einen Authorisierungsdienstleister (5) mit Authentifizierung des Kunden durch Vergleich einer biometrischen. Probe des Kunden (1) mit einem beim Authorisierungsdienstleister (5) gespeicherten biometrischen Muster des Kunden (1),
wobei der Authorisierungsvorgang die Schritte
(a) Aufbau einer Telefonverbindung über ein Kommunikationsnetzwerk (4) zwischen dem Waren-oder Dienstleistungsanbieter (2) und dem Authorisierungsdienstleister (5)
(b) Übermittlung einer der Identifizierung des Kunden dienenden Kennung vom Kunden (1) zum Authorisierungsdienstleister (5) über die aufgebaute Telefonverbindung (109),
(c) Übermittlung einer biometrischen Probe des Kunden (1) über die aufgebaute Telefonverbindung (114),
(d) Übermittlung der Höhe des zu transferierenden Betrages (121) und etwaiger weiterer für die Transaktion benötigter Daten vom Kunden (1) zum Authorisierungsdienstleister (5) über die aufgebaute Telefonverbindung,
(e) Einleitung der Transaktion (124) durch den Authorisierungsdienstleister (5), wenn die Übereinstimmung zwischen der biometrischen Probe und dem gespeicherten biometrischen Muster des Kunden (1) größer als ein vorbestimmter Schwellenwert ist, aufweist,
**dadurch gekennzeichnet,**
**daß** der Aufbau der Telefonverbindung über einen Router (3) erfolgt, welcher einer virtuellen Telefonnummer die reale Telefonnummer des Authorisierungsdienstleisters (5) zuweist (102) sowie die Telefonnummer des Waren - oder Dientleistungsanbieters (2) und einen Code überträgt (105), der zeitgleich durch den Router (3) und den Authonsierungsdienstleister (5) mit Hilfe desselben Algorithmus errechnet wird (104),
**daß** die Annahme der Telefonverbindung durch den Authorisierungsdienstleister (5) erfolgt, wenn der Waren - oder Dienstleistungsanbieter (2) unter der übertragenen Telefonnummer beim Authorisierungsdienstleister (5) registriert ist und der übertragene Code mit dem beim Authorisierungsdienstleister (5) errechneten Code übereinstimmt (106),
**daß** die biometrische Probe eine vom Kunden (1) nachgesprochene Wortfolge ist, die dem Kunden (1) zuvor vom Authorisierungsdienstleister (5) über die aufgebaute Telefonverbindung übermittelt worden ist,
das gespeicherte biometrische Muster ein Stimmuster des Kunden (1) ist,
die Prüfung auf Übereinstimmung zwischen der nachgesprochenen Wortfolge und dem gespeicherten Stimmuster hinsichtlich für einen Sprecher charakteristischer individueller Stimmerkmale durchgeführt wird (119),
und die Einleitung der Transaktion durch den Authorisierungsdienstleister (5) nur dann erfolgt, wenn sich die nachgesprochene Wortfolge aus denselben Wörtern in derselben Reihenfolge zusammensetzt wie die vorgegebene Wortfolge,
wobei die Wortfolge dem Kunden (1) vor Beginn des jeweiligen Authorisierungsvorgangs nicht bekannt ist.

2. Verfahren nach Anspruch 1,
**dadurch gekennzeichnet,**
**daß** die Eingabe der Kennung (109) sowie der für die Transaktion benötigten Daten durch Spracheingabe erfolgt.

3. Verfahren nach einem der vorangehenden Ansprüche,
**dadurch gekennzeichnet,**
**daß** die Kennung der Name des Kunden (1) ist.

4. Verfahren nach einem der vorangehenden Ansprüche,
**dadurch gekennzeichnet,**
**daß** die Einleitung der Transaktion dem Waren - oder Dienstleistungsanbieter (2) vom Authorisierungsdienstleister (5) unmittelbar mitgeteilt wird (126).

5. Verfahren nach einem der vorangehenden Ansprüche,
**dadurch gekennzeichnet,**
**daß** die Einleitung der Transaktion dem Kunden (1) vom Authorisierungsdienstleister (5) unmittelbar über die aufgebaute Telefonverbindung bestätigt wird (125).

6. Verfahren nach einem der vorangehenden Ansprüche,
**dadurch gekennzeichnet,**
**daß** für jeweilige neue Authorisierungsvorgänge die Verbindung zum Authorisierungsdienstleister (5) über einen elektronischen Vermittler (6) an regelmäßig wechselnde reale Telefonnummern des Authorisierungsdienstleisters (5) vermittelt wird (103), um elektronische Daueranwahl des Authorisierungsdienstleisters (5) durch unberechtigte Dritte zum vermeiden und die Verbindungssicherheit zu erhöhen.

7. System zur Authorisierung einer kommerziellen Transaktion zwischen einem. Kunden (1) und einem Waren- oder Dienstleistungsanbieter (2) durch einen Authorisierungsdienstleister (5) mit Authentifizierung des Kunden (1) durch Vergleich einer biometrischen Probe des Kunden (1) mit einem beim Authorisierungsdienstleister (5) gespeicherten biometrischen Muster des Kunden,
wobei das System
(i) ein dienstleisterseitiges Verbindungsmittel aufweist, das über eine aufgebaute Telefonverbindung eine Kennung des Kunden (1), eine biometrische Probe des Kunden und die Höhe des zu transferierenden Betrages empfängt,
(ii) einen dienstleisterseitigen Speicher (11) aufweist, in welchem ein biometrisches Muster des Kunden (1) gespeichert ist,
(iii) dienstleisterseitige Vergleichsmittel (12) aufweist, welche die Übereinstimmung zwischen der biometrischen Probe und dem gespeicherten biometrischen Muster des Kunden (1) überprüfen,
(iv) eine dienstleisterseitige Steuer- und Auswerteeinheit (10) aufweist, welche die Transaktion einleitet, wenn die Übereinstimmung zwischen der biometrischen Probe und dem gespeicherten biometrischen Muster des Kunden (1) größer als ein vorbestimmter Schwellenwert ist,
**dadurch gekennzeichnet,**
**daß** das System ferner
anbieterseitig einen Router (3) aufweist, der zum Aufbau der Telefonverbindung einer virtuellen Telefonnummer die reale Telefonnummer des Authorisierungsdienstleisters (5) zuweist, einen Code errechnet, sowie die Telefonnummer des Waren - oder Dienstleinstungsanbieters (2) und den Code überträgt,
**daß** das Verbindungsmittel simultan mit dem Router mit dem gleichen Algorithmus einen Code errechnet und beim Aufbau der Verbindung zwischen dem Waren - oder Dienstleistungsanbietes (2) und dem Authorisierungsdienstleister (5) überprüft, ob der Waren - oder Dienstleistungsanbietes (2) unter der von dem Router (3) übertragenen Telefonnummer beim Authorisierungsdienstleister (5) registriert ist, und ob der vom Router (3) übertragene Code mit dem vom Verbindungsmittel (7) berechneten Code übereinstimmt,
**daß** das System eine Spracherkennung aufweist,
die Vergleichsmittel eine textunabhängige Stimmerkennung (11) aufweisen,
die biometristhen Probe eine vom Kunden (1) nachgesprochene Wortfolge ist, die zuvor von der Steuer- und Auswerteeinheit (10) generiert und von dem Verbindungsmittel (7) an den Kunden (1) übermittelt worden ist,
das gespeicherte biometrische Muster ein Stimmuster des Kunden (1) ist,
und die textunabhängige Stimmerkennung die Prüfung auf Übereinstimmung zwischen der nachgesprochenen Wortfolge und dem gespeicherten Stimmuster hinsichtlich für einen Sprecher charakteristischer individueller Stimmerkmale durchführt,
und die steuer- und Auswerteeinheit die Transaktion (10) nur dann einleitet, wenn sich die nachgesprochene Wortfolge aus denselben Wörtern in derselben Reihenfolge zusammensetzt wie die zuvor generierte Wortfolge,
wobei die Wortfolge dem Kunden (1) vor Beginn des jeweiligen Authorisierungsvorgangs nicht bekannt ist.

## Claims

1. Method of authorizing a commercial transaction between a customer (1) and a goods- or services supplier (2) by means of an authorizing service provider (5) with authentication of the customer by comparison of a biometric sample of the customer (1) with a biometric pattern of the customer (1) stored with the authorizing service provider (5),
wherein the authorizing process comprises the steps
a) establishment of a telephone connection via a communications network (4) between the goods- or services supplier (2) and the authorizing service provider (5),
b) communication of an identifier used to identify the customer by the customer (1) to the authorizing service provider (5) via the established telephone connection (109),
c) communication of a biometric sample of the customer (1) via the established telephone connection (114),
d) communication of the value of the amount to be transferred (121) and of any further data needed for the transaction by the customer (1) to the authorizing service provider(5) via the established telephone connection,
e) initiation of the transaction (124) by the authorizing service provider (5) when the correspondence between the biometric sample and the stored biometric pattern of the customer (1) is greater than a predetermined threshold value,
**characterized in**
**that** establishment of the telephone connection is effected by means of a router (3), which assigns the real telephone number of the authorizing service provider (5) to a virtual telephone number (102) and transmits the telephone number of the goods- or services supplier (2) and a code (105), which is computed simultaneously by the router (3) and the authorizing service provider (5) with the aid of the same algorithm (104),
**that** acceptance of the telephone connection by the authorizing service provider (5) occurs if the goods-or services supplier (2) is registered with the authorizing service provider (5) under the transmitted telephone number and the transmitted code matches the code computed by the authorizing service provider (5) (106),
**that** the biometric sample is a word sequence, which is repeated by the customer (1) and which has previously been communicated to the customer (1) by the authorizing service provider (5) via the established telephone connection,
the stored biometric pattern is a voice pattern of the customer (1),
the check for correspondence between the repeated word sequence and the stored voice pattern in terms of individual voice features characteristic of a speaker is conducted (119),
and the initiation of the transaction by the authorizing service provider (5) occurs only if the repeated word sequence is composed of the same words in the same order as the predefined word sequence,
wherein the word sequence is not known to the customer (1) prior to the start of the respective authorizing process.

2. Method according to claim 1,
**characterized in**
**that** entry of the identifier (109) and of the data needed for the transaction is effected by voice input.

3. Method according to one of the preceding claims,
**characterized in**
**that** the identifier is the name of the customer (1).

4. Method according to one of the preceding claims,
**characterized in**
**that** the initiation of the transaction is directly communicated (126) to the goods- or services supplier (2) by the authorizing service provider (5).

5. Method according to one of the preceding claims,
**characterized in**
**that** the initiation of the transaction is confirmed (125) to the customer (1) by the authorizing service provider (5) directly via the established telephone connection.

6. Method according to one of the preceding claims,
**characterized in**
**that** for respective new authorizing processes the connection to the authorizing service provider (5) is switched (103) by an electronic switching unit (6) to regularly changing real telephone numbers of the authorizing service provider (5) in order to prevent electronic continuous dialling of the authorizing service provider (5) by unauthorized third parties and to increase the security of the connection.

7. System for authorizing a commercial transaction between a customer (1) and a goods- or services supplier (2) by means of an authorizing service provider (5) with authentication of the customer (1) by comparison of a biometric sample of the customer (1) with a biometric pattern of the customer (1) stored with the authorizing service provider (5), wherein the system comprises
a) a service-provider-side connecting means, which via an established telephone connection receives an identifier of the customer (1), a biometric probe of the customer and the value of the amount to be transferred,
b) a service-provider-side memory (11), in which a biometric pattern of the customer (1) is stored,
c) service-provider-side comparison means (12), which check the correspondence between the biometric sample and the stored biometric pattern of the customer (1),
d) a service-provider-side control- and evaluation unit (10), which initiates the transaction if the correspondence between the biometric sample and the stored biometric pattern of the customer (1) is greater than a predetermined threshold value,
**characterized in**
**that** the system further comprises
on the supplier side a router (3), which for establishing the telephone connection assigns the real telephone number of the authorizing service provider (5) to a virtual telephone number, computes a code, and transmits the telephone number of the goods- or services supplier (2) and the code,
**that** the connecting means computes a code simultaneously with the router using the same algorithm and during establishment of the connection between the goods- or services supplier (2) and the authorizing service provider (5) checks whether the goods- or services supplier (2) is registered with the authorizing service provider (5) under the telephone number transmitted to the router (3) and whether the code transmitted by the router (3) matches the code computed by the connecting means (7), that the system has a speech recognition device, the comparison means have a text-independent voice recognition device (11),
the biometric sample is a word sequence, which is repeated by the customer (1) and which has previously been generated by the control- and evaluation unit (10) and communicated by the connecting means (7) to the customer (1),
the stored biometrical pattern is a voice pattern of the customer (1),
and the text-independent voice recognition device conducts the check for correspondence between the repeated word sequence and the stored voice pattern in terms of individual voice features characteristic of a speaker,
and the control- and evaluation unit initiates the transaction (10) only if the repeated word sequence is composed of the same words in the same order as the previously generated word sequence,
wherein the word sequence is not known to the customer (1) prior to the start of the respective authorizing process.

## Revendications

1. Procédé pour l'autorisation d'une transaction commerciale entre un client (1) et un fournisseur de marchandise ou de prestation de service (2), donnée par un prestataire de service d'autorisation (5), comportant une authentification du client par comparaison d'une épreuve biométrique du client (1) avec un échantillon biométrique du client (1) qui est mémorisé chez le prestataire de service d'autorisation (5),
dans lequel le processus d'autorisation comprend les étapes suivantes :
(a) établissement d'une liaison téléphonique, par l'intermédiaire d'un réseau de communication (4), entre le fournisseur de marchandise ou de prestation de service (2) et le prestataire de service d'autorisation (5) ;
(b) transmission d'un code servant à l'identification du client (1) au prestataire de service d'autorisation (5) par l'intermédiaire de la liaison téléphonique (109) établie ;
(c) transmission d'un épreuve biométrique du client (1) par l'intermédiaire de la liaison téléphonique (114) établie ;
(d) transmission du chiffre du montant (121) à transférer et éventuellement d'autres données nécessaires pour la transaction, du client (1) au prestataire de service d'autorisation (5) par l'intermédiaire de la liaison téléphonique établie ;
(e) lancement de la transaction (124) par le prestataire de service d'autorisation (5) lorsque la concordance entre l'épreuve biométrique et l'échantillon biométrique du client (1) mémorisé est supérieure à un seuil prédéterminé,
**caractérisé par le fait que**
l'établissement de la liaison téléphonique s'effectue par l'intermédiaire d'un routeur (3) qui attribue (102) à un numéro de téléphone virtuel le numéro de téléphone réel du prestataire de service d'autorisation (5), et qui transmet (105) le numéro de téléphone du fournisseur de marchandise ou de prestation de service (2) et un code qui est calculé en même temps (104) par le routeur (3) et par le prestataire de service d'autorisation (5) à l'aide du même algorithme ;
par le fait ce que l'acceptation de la liaison téléphonique par le prestataire de service d'autorisation (5) intervient (106) lorsque le fournisseur de marchandise ou de prestation de service (2) est enregistré chez le prestataire de service d'autorisation (5) sous le numéro de téléphone transmis et lorsque le code transmis concorde avec le code calculé chez le prestataire de service d'autorisation (5) ;
**par le fait que** l'épreuve biométrique est une suite de mots répétée par le client (1), qui a été préalablement transmise au client (1) par le prestataire de service d'autorisation par l'intermédiaire de la liaison téléphonique établie ;
l'échantillon biométrique enregistré est un échantillon de la voix du client (1) ;
la vérification de la concordance entre la suite de mots répétée et l'échantillon de voix enregistré est exécutée pour des particularités de voix individuelles qui sont caractéristiques pour un locuteur (119) ;
et le lancement de la transaction par le prestataire de service d'autorisation (5) ne se produit que lorsque la suite de mots répétée est composée des mêmes mots, dans le même ordre de succession, que la suite de mots choisie ;
la suite de mots n'étant pas connue du client (1) avant le début de l'opération d'autorisation considérée.

2. Procédé selon la revendication 1, **caractérisé par le fait que** l'entrée du code (109) ainsi que des données nécessaires pour la transaction s'effectue par une entrée vocale.

3. Procédé selon l'une des revendications précédentes, **caractérisé par le fait que** le code est le nom de client (1).

4. Procédé selon l'une des revendications précédentes, **caractérisé par le fait que** le lancement de la transaction est immédiatement transmis au fournisseur de marchandise ou de prestation de service (2) par le prestataire de service d'autorisation (5) (126).

5. Procédé selon l'une des revendications précédentes, **caractérisé par le fait que** le lancement de la transaction est immédiatement confirmé au client (1) par le prestataire de service d'autorisation (5) par l'intermédiaire de la liaison téléphonique établie (125).

6. Procédé selon une des revendications précédentes, **caractérisé par le fait que**, pour chacune des nouvelles opérations d'autorisation, la liaison avec le prestataire de service d'autorisation (5) est établie (103) par l'intermédiaire d'un médiateur électronique (6) à des numéros de téléphone réels du prestataire de service d'autorisation (5) qui changent régulièrement pour éviter que des tiers non autorisés n'effectuent une sélection électronique durable du prestataire de service d'autorisation (5), afin d'améliorer la sécurité de la liaison.

7. Système pour l'autorisation d'une transaction commerciale entre un client (1) et un fournisseur de marchandise ou de prestation de service (2) par un prestataire de service d'autorisation (5) comportant une authentification du client (1) par comparaison d'une épreuve biométrique du client (1) avec un échantillon biométrique du client (1) qui est mémorisé chez le prestataire de service d'autorisation (5), le système présentant
(i) un moyen de liaison côté prestataire de service qui reçoit par l'intermédiaire d'une liaison téléphonique établie un code du client (1), un échantillon biométrique du client et le chiffre du montant à transférer ;
(ii) une mémoire côté prestataire de service (11) dans laquelle est enregistré un échantillon biométrique du client (1) ;
(iii) un moyen de comparaison côté prestataire de service (12) qui vérifie la concordance entre l'épreuve biométrique et l'échantillon biométrique enregistré du client (1) ;
(iv) une unité de commande et d'analyse côté prestataire de service (10) qui lance la transaction lorsque la concordance entre l'épreuve biométrique et l'échantillon biométrique enregistré du client (1) est supérieure à un seuil prédéterminé,
**caractérisé par le fait que** le système présente en outre côté fournisseur, un routeur (3) qui, pour l'établissement de la liaison téléphonique, attribue le numéro de téléphone réel du prestataire de service d'autorisation (5) à un numéro de téléphone virtuel, calcule un code et transmet le numéro de téléphone du fournisseur de marchandise ou de prestation de service (2) et le code,
**par le fait que** le moyen de liaison calcule un code simultanément avec le routeur, avec le même algorithme et, lors de l'établissement de la liaison entre le fournisseur de marchandise ou de prestation de service (2) et le prestataire de service d'autorisation (5), vérifie si le fournisseur de marchandise ou de prestation de service (2) est enregistré chez le prestataire de service d'autorisation (5) sous le numéro de téléphone transmis par le routeur (3) et si le code transmis par le routeur (3) concorde avec le code calculé par le moyen de liaison (7) ;
**par le fait que** le système présente une reconnaissance vocale ;
les moyens de comparaison présentent une reconnaissance de la voix (11) indépendante du texte ;
l'épreuve biométrique est une suite de mots répétée par le client (1), qui a été préalablement générée par l'unité de commande et d'analyse (10) et qui a été transmise au client (1) par le moyen de liaison (7) :
l'échantillon biométrique enregistré est un échantillon de la voix du client (1) ;
et la reconnaissance de voix indépendante du texte exécute la vérification de la concordance entre la suite de mots répétée et l'échantillon de voix enregistré sous le rapport de particularités de voix individuelles qui sont caractéristiques d'un locuteur :
et l'unité de commande et d'analyse ne lance la transaction (10) que lorsque la suite de mots répétée est composée des mêmes mots dans le même ordre de succession, que la suite de mots générée préalablement,
la suite de mots n'étant pas connue du client (1) avant le début de l'opération d'autorisation concernée.
